(19) **Europäisches Patentamt**
**European Patent Office**
**Office européen des brevets**

(11) **EP 2 518 806 B1**

(12) **EUROPEAN PATENT SPECIFICATION**

(45) Date of publication and mention
of the grant of the patent:
**19.08.2015 Bulletin 2015/34**

(51) Int Cl.:
*H01M 4/86* (2006.01)  *H01M 4/90* (2006.01)
*H01M 8/10* (2006.01)  *H01M 4/88* (2006.01)

(21) Application number: **10839224.2**

(22) Date of filing: **13.12.2010**

(86) International application number:
**PCT/JP2010/072392**

(87) International publication number:
**WO 2011/077991 (30.06.2011 Gazette 2011/26)**

(54) **INK, FUEL CELL CATALYST LAYER FORMED BY USING THE INK AND USES THEREOF**

TINTE, MITHILFE DER TINTE HERGESTELLTE KATALYSATORSCHICHT UND DEREN VERWENDUNGEN

ENCRE, COUCHE CATALYTIQUE PRODUITE À L'AIDE DE L'ENCRE ET LEURS UTILISATIONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.12.2009 JP 2009294869**

(43) Date of publication of application:
**31.10.2012 Bulletin 2012/44**

(73) Proprietor: **Showa Denko K.K.**
**Tokyo 105-8518 (JP)**

(72) Inventors:
• **IMAI, Takuya**
**Chiba-shi**
**Chiba 267-0056 (JP)**
• **WAKIZAKA, Yasuaki**
**Chiba-shi**
**Chiba 267-0056 (JP)**
• **SHISHIKURA, Toshikazu**
**Chiba-shi**
**Chiba 267-0056 (JP)**
• **HORIKITA, Masaki**
**Chiba-shi**
**Chiba 267-0056 (JP)**

• **OTA, Kenichiro**
**Koganei-shi**
**Tokyo 184-0015 (JP)**

(74) Representative: **Strehl Schübel-Hopf & Partner**
**Maximilianstrasse 54**
**80538 München (DE)**

(56) References cited:
**CA-A1- 2 718 893       CA-A1- 2 722 083**
**JP-A- 2007 257 888    JP-A- 2008 108 594**
**JP-A- 2009 208 070    JP-A- 2009 226 311**

• **KYUNG DON NAM ET AL: "Partially Oxidized Niobium Carbonitride as Non-Platinum Cathode for PEFC", ELECTROCHEMICAL AND SOLID-STATE LETTERS, IEEE SERVICE CENTER, PISCATAWAY, NJ, US, vol. 12, no. 11, 10 September 2009 (2009-09-10), pages B158-B160, XP008147614, ISSN: 1099-0062, DOI: 10.1149/1.3216456**
• **NAM KD ET AL.: 'Partially Oxidized Niobium Carbonitride as Non-Platinum Cathode for PEFC' ELECTROCHEMICAL AND SOLID-STATE LETTERS vol. 12, no. 11, 10 September 2009, pages B158 - B160, XP008147614**

**Description**

TECHNICAL FIELD

The present invention relates to an ink, a fuel cell catalyst layer formed by using the ink, and uses thereof.

BACKGROUND ART

Fuel cells are classified into several types according to types of electrolytes or electrodes. Typical types are alkaline types, phosphoric acid types, molten carbonate types, solid electrolyte types and polymer electrolyte types. Of these, polymer electrolyte fuel cells that can operate at temperatures ranging from low temperatures (about -40°C) to about 120°C have been attracting attention and have been recently developed and practically used as power sources for low pollution automobiles. The polymer electrolyte fuel cells are expected to be used as automobile drive sources or stationary power sources. The use in these applications requires long-term durability.

The polymer electrolyte fuel cell has a membrane electrode assembly in which a solid polymer electrolyte is sandwiched between an anode and a cathode. A fuel is fed to the anode, and oxygen or air is supplied to the cathode, whereby oxygen is reduced at the cathode to produce electricity. The fuel is usually hydrogen or methanol.

To increase the reaction rate in fuel cells and enhance the energy conversion efficiency of fuel cells, a layer containing a catalyst (hereinafter, also referred to as a "fuel cell catalyst layer") is formed on the surface of a cathode (an air electrode) or an anode (a fuel electrode) of fuel cells. The fuel cell catalyst layer is generally formed by applying an ink that contains a fuel cell catalyst and a solvent on an electrolyte membrane and/or a gas diffusion layer and drying.

Conventionally, as a fuel cell catalyst that constitutes the ink for forming the fuel cell catalyst layer, a catalyst primarily containing a noble metal is generally used. Of noble metals, platinum has been primarily used, which is stable at high potential and has high activity (for example. Patent Documents 1 to 10). However, since platinum is expensive and exists in a limited amount, alternative fuel cell catalysts have been desired.

Further, noble metals used on the cathode surface are sometimes dissolved in an acidic atmosphere and are not suited in applications requiring long-term durability. Accordingly, it has been demanded to develop an inexpensive fuel cell catalyst which is not corroded in an acidic atmosphere and has excellent durability and high oxygen reducing activity. Furthermore, it has been strongly demanded to develop an ink that contains a fuel cell catalyst having such properties and is capable of efficiently forming a high-performance fuel cell catalyst layer inexpensively.

As a catalyst alternative to platinum, materials containing nonmetals such as carbon, nitrogen and boron have been recently attracting attention. The materials containing these nonmetals are more inexpensive than noble metals such as platinum and are abundant.

Non-Patent Document 1 reports that zirconium-based $ZrO_xN$ compounds show oxygen reducing activity.

Patent Document 11 discloses, as platinum-alternative materials, oxygen-reducing electrode materials containing a nitride of one or more elements selected from Groups 4, 5 and 14 in the long periodic table. Patent Document 12 discloses a fuel cell catalyst comprising an oxycarbonitride which contains niobium.

However, the materials containing these nonmetals do not provide sufficient oxygen reducing activity for practical use as catalysts.

Prior Art Documents

Patent Document

Patent Document 1: JP-A-2009-152112
Patent Document 2: JP-A-2009-158128
Patent Document 3: JP-A-2009-152075
Patent Document 4: JP-A-2009-152128
Patent Document 5: JP-A-2009-151980
Patent Document 6: JP-A-2009-211869
Patent Document 7: JP-A-2008-305699
Patent Document 8: JP-A-2008-262904
Patent Document 9: JP-A-2009-70673
Patent Document 10: JP-A-2006-54165
Patent Document 11: JP-A-2007-31781

Patent Document 12 CA 2718893

Non-Patent Document

Non-Patent Document 1: S. Doi, A. Ishihara, S. Mitsushima, N. kamiya, and K. Ota, Journal of The Electrochemical Society, 154 (3) B362-B369 (2007)

SUMMARY OF THE INVENTION

PROBLEM TO BE SOLVED BY THE INVENTION

The present invention is aimed at solving the problems in conventional art. It is an object of the present invention to provide an ink for forming a fuel cell catalyst layer that is capable of efficiently forming a high-performance fuel cell catalyst layer inexpensively.

MEANS FOR SOLVING PROBLEM

The present inventors studied diligently to solve the problems in conventional art, and have found that by using an ink comprising a fuel cell catalyst that comprises a specific metal-containing oxycarbonitride, the ink comprising the fuel cell catalyst, an electron conductive material and a proton conductive material at a content controlled to be a specific range, a high-performance fuel cell catalyst layer can be efficiently formed inexpensively, and power generation property of a fuel cell comprising the catalyst layer can be improved. The present invention has been made based on this finding.
The present invention relates to the following matters (1) to (8), for example.

(1) An ink for forming a fuel cell catalyst layer comprising a fuel cell catalyst, an electron conductive material, a proton conductive material and a solvent, wherein
the fuel cell catalyst comprises a metal-containing oxycarbonitride that contains niobium and/or titanium;
the mass ratio [(A) / (B)] of the content (A) of the fuel cell catalyst to the content (B) of the electron conductive material is 1 to 6; and
the mass ratio [(D)/(C)] of the content (D) of the proton conductive material to the total content (C) of the fuel cell catalyst and the electron conductive material is 0.2 to 0.6.
(2) The ink described in (1), wherein the metal-containing oxycarbonitride has a primary particle diameter of 5 nm to 1.5 $\mu$m.
(3) A fuel cell catalyst layer formed by using the ink described in (1) or (2).
(4) The fuel cell catalyst layer described in (3), wherein the mass of the fuel cell catalyst per unit area is 2.5 to 4.3 mg/cm$^2$.
(5) An electrode comprising a fuel cell catalyst layer and a gas diffusion layer, wherein the fuel cell catalyst layer is the fuel cell catalyst layer described in (3) or (4).
(6) A membrane electrode assembly comprising a cathode, an anode and an electrolyte membrane interposed between the cathode and the anode, wherein the cathode is the electrode described in (5).
(7) A fuel cell comprising the membrane electrode assembly described in (6).
(8) A polymer electrolyte fuel cell comprising the membrane electrode assembly described in (6).

ADVANTAGEOUS EFFECTS OF THE INVENTION

The ink of the present invention can efficiently form a high-performance fuel cell catalyst layer inexpensively. The fuel cell catalyst layer of the present invention is excellent in durability and has high catalytic activity. Thus, a fuel cell or the like comprising such a fuel cell catalyst layer has significantly excellent power generation property.

BRIEF DESCRIPTION OF THE DRAWINGS

[Fig. 1] Fig. 1 is an example of a cross-sectional view of a dismantled membrane electrode assembly (MEA).
[Fig. 2] Fig. 2 is an example of a cross-sectional view of a dismantled single cell of a polymer electrolyte fuel cell.
[Fig. 3] Fig. 3 is a schematic view of a system for evaluating the power generation property of a single cell of a polymer electrolyte fuel cell.

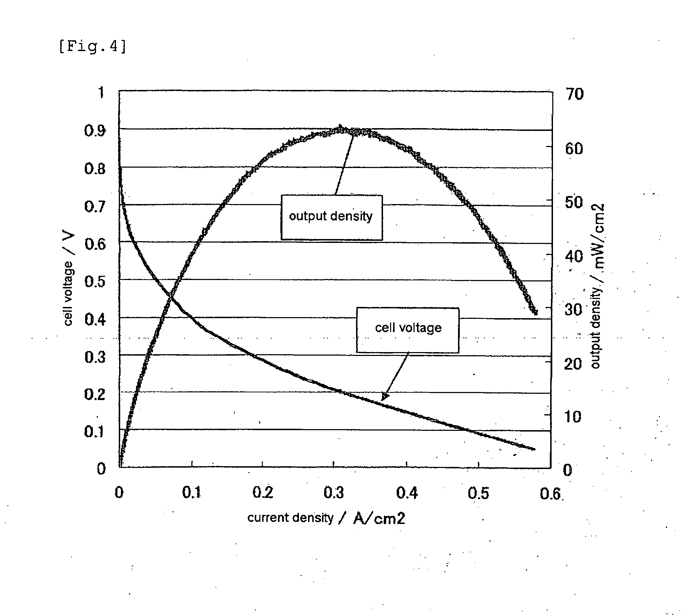

[Fig. 4] Fig. 4 is current-voltage property curve and current-power density curve of a single cell (1) prepared in Example 1.

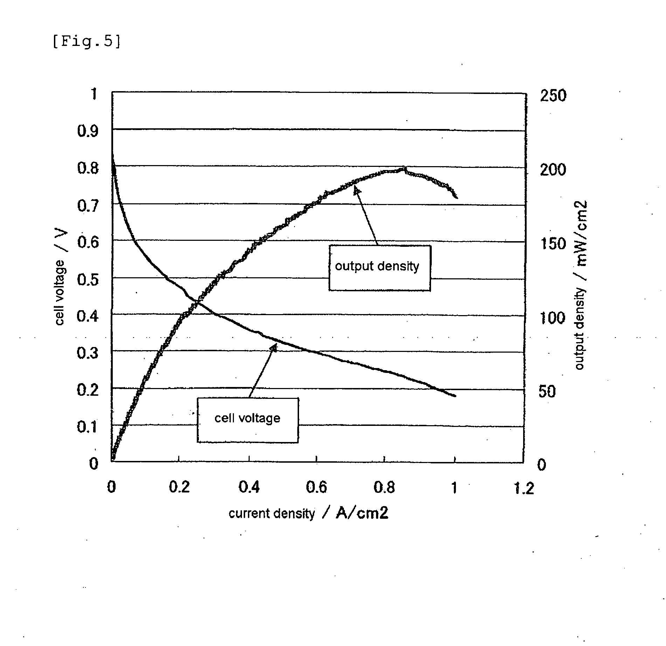

[Fig. 5] Fig. 5 is current-voltage property curve and current-power density curve of a single cell (2) prepared in Example 2.

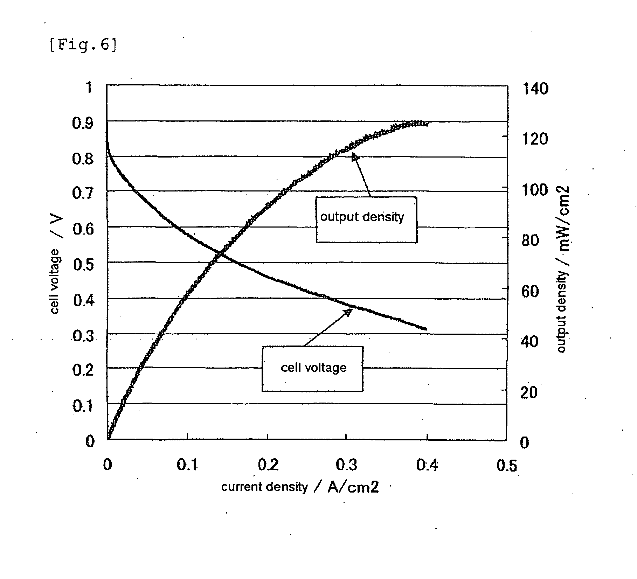

[Fig. 6] Fig. 6 is current-voltage property curve and current-power density curve of a single cell (3) prepared in Example 3.

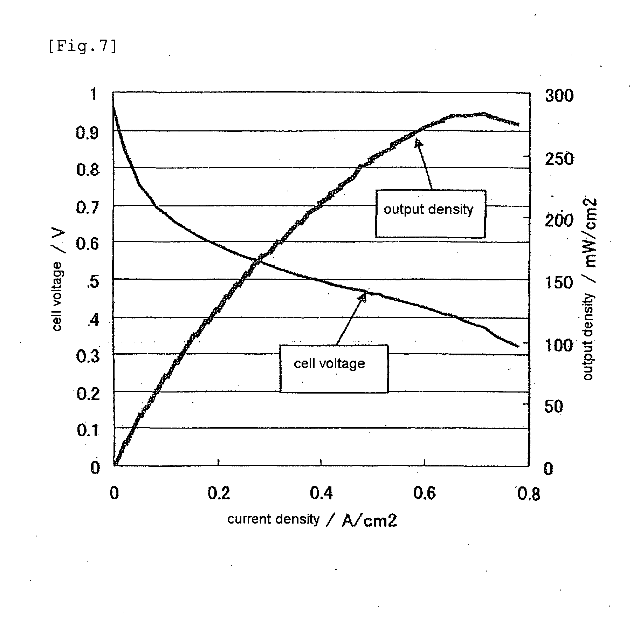

[Fig. 7] Fig. 7 is current-voltage property curve and current-power density curve of a single cell (4) prepared in Example 4.

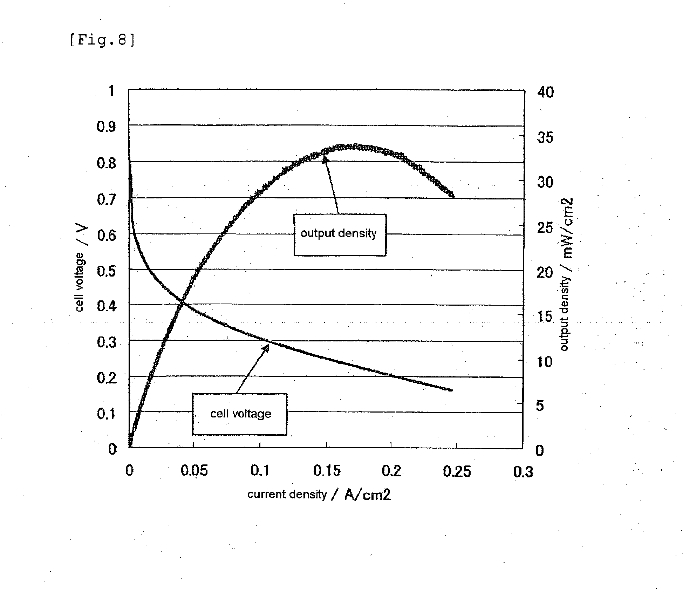

[Fig. 8] Fig. 8 is current-voltage property curve and current-power density curve of a single cell (5) prepared in Comparative Example 1.

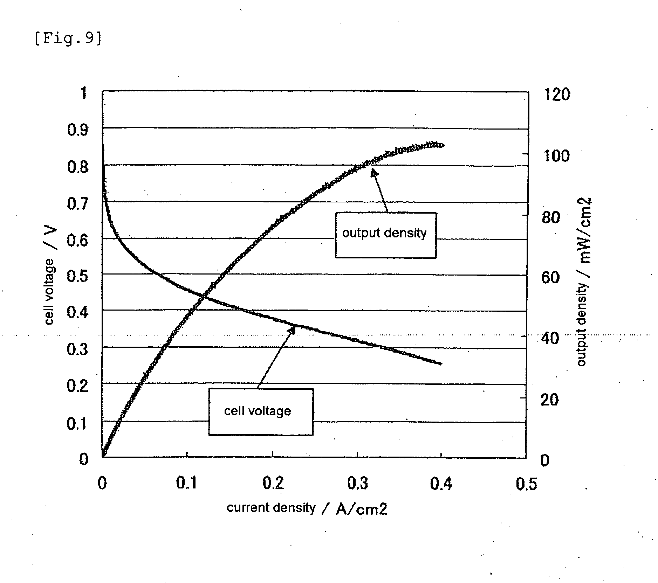

[Fig. 9] Fig. 9 is current-voltage property curve and current-power density curve of a single cell (6) prepared in Comparative Example 2.

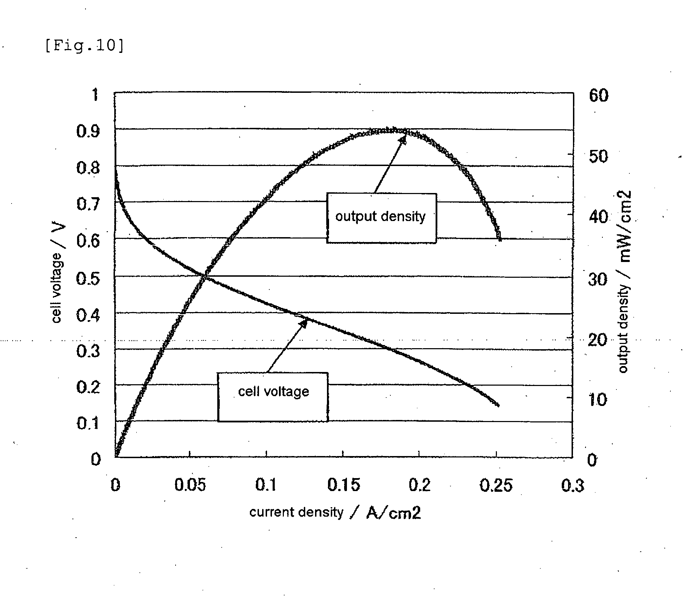

[Fig. 10] Fig. 10 is current-voltage property curve and current-power density curve of a single cell (7) prepared in Comparative Example 3.

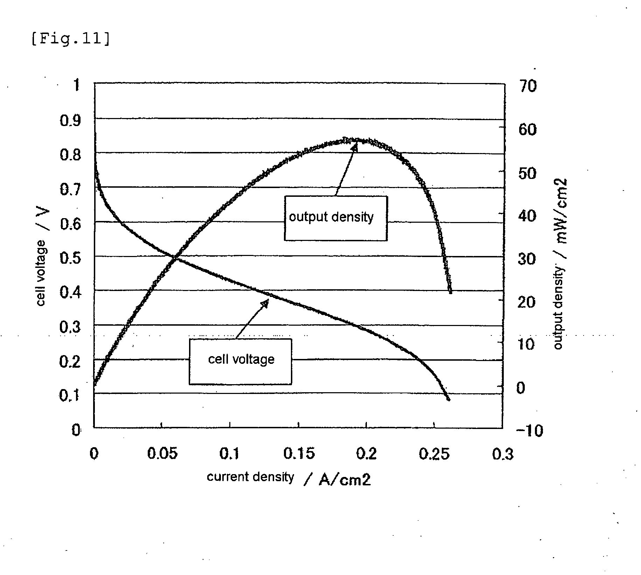

[Fig. 11] Fig. 11 is current-voltage property curve and current-power density curve of a single cell (8) prepared in Comparative Example 4.

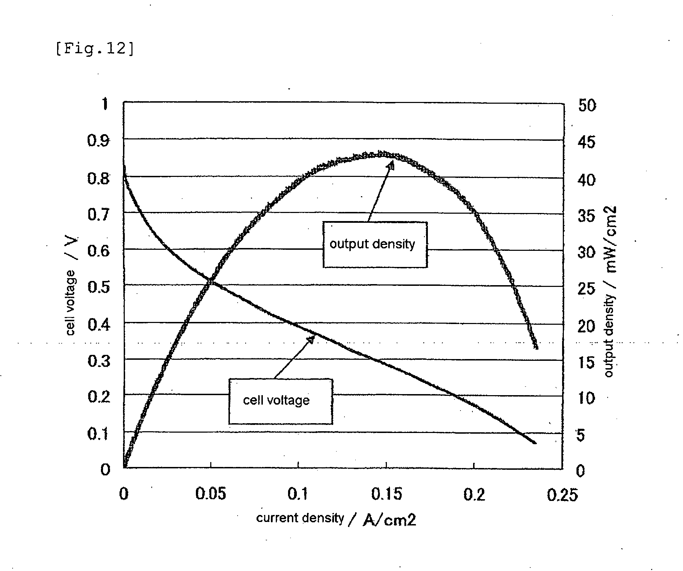

[Fig. 12] Fig. 12 is current-voltage property curve and current-power density curve of a single cell (9) prepared in Comparative Example 5.

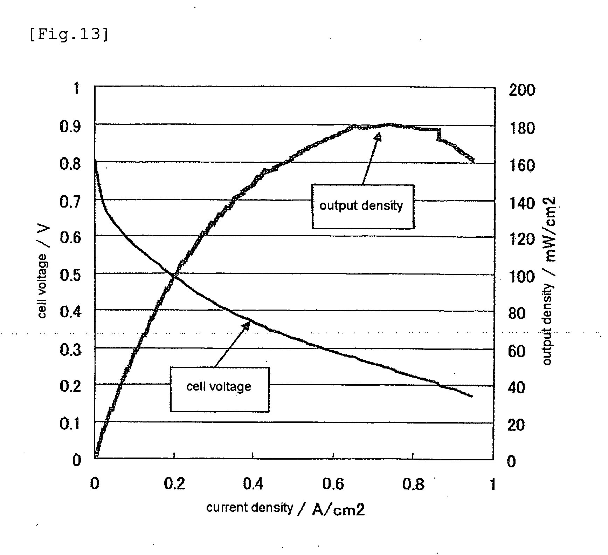

[Fig. 13] Fig. 13 is current-voltage property curve and current-power density curve of a single cell (10) prepared in Comparative Example 6.

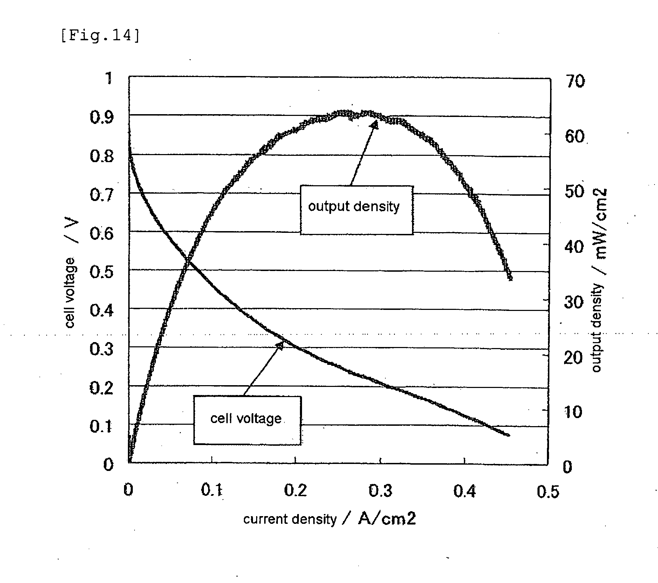

[Fig. 14] Fig. 14 is current-voltage property curve and current-power density curve of a single cell (11) prepared in Comparative Example 7.

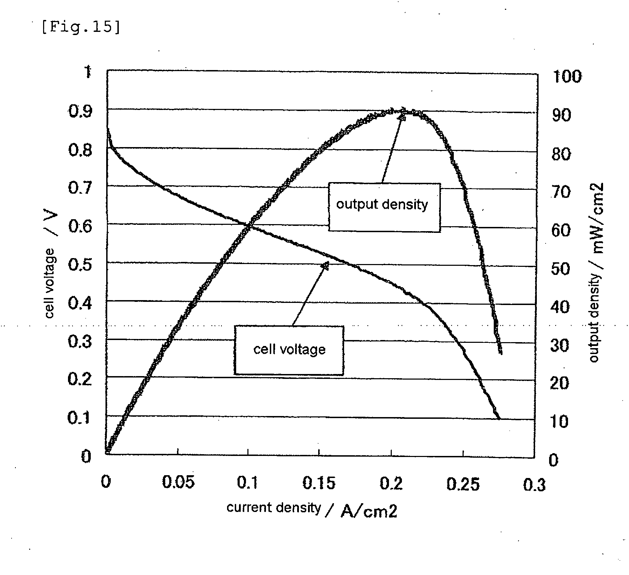

[Fig. 15] Fig. 15 is current-voltage property curve and current-power density curve of a single cell (12) prepared in Comparative Example 8.

## MODE FOR CARRYING OUT THE INVENTION

### Ink

The ink of the present invention is an ink for forming a fuel cell catalyst layer, and comprises a fuel cell catalyst, an electron conductive material, a proton conductive material and a solvent.

The mass ratio [(A) / (B)] of the content (A) of the fuel cell catalyst to the content (B) of the electron conductive material is 1 to 6, preferably 2 to 5, more preferably 3 to 4.

The mass ratio [(D) / (C)] of the content (D) of the proton conductive material to the total content (C) of the fuel cell catalyst and the electron conductive material is 0.2 to 0.6, preferably 0.3 to 0.5, more preferably 0.4 to 0.5.

The fuel cell catalyst layer formed by using the ink having the mass ratio [(A)/(B)] and the mass ratio [(D)/(C)] within the above range is excellent in durability and has high catalytic activity.

Hereinafter, the fuel cell catalyst, the electron conductive material, the proton conductive material and the solvent, each of which is used in the present invention, are described.

### <Fuel cell catalyst>

The fuel cell catalyst used in the present invention comprises a metal-containing oxycarbonitride that contains niobium and/or titanium.

The metal-containing oxycarbonitride may contain a metal other than niobium and titanium. The metal other than niobium and titanium is preferably at least one metal selected from the group consisting of iron, lanthanum, tantalum, zirconium, hafnium, vanadium, molybdenum, chromium, tungsten, cobalt, nickel and copper; more preferably at least one metal selected from the group consisting of iron, lanthanum, tantalum, zirconium, hafnium and vanadium; still more preferably at least one metal selected from the group consisting of iron, lanthanum, tantalum and zirconium; particularly preferably at least one metal selected from the group consisting of iron, lanthanum and zirconium; extremely preferably at least one metal selected from the group consisting of iron and lanthanum.

The fuel cell catalyst comprising such a metal-containing oxycarbonitride has a catalytic activity equal to or more than that of a platinum catalyst, and is excellent in durability and considerably more inexpensive than a platinum catalyst.

The compositional formula of the metal-containing oxycarbonitride is represented by $MC_xN_yO_z$, wherein x, y, z are each a proportion of the number of atoms, $0.01{\leq}x{\leq}0.5$, $0.01{\leq}y{\leq}0.5$, and $0.5{\leq}z{\leq}2.5$.

In the compositional formula, preferably the following is satisfied: $0.1{\leq}x{\leq}0.5$, $0.05{\leq}y{\leq}0.4$ and $1.0{\leq}z{\leq}2.5$, and more preferably the following is satisfied: $0.15{\leq}x{\leq}0.5$, $0.05{\leq}y{\leq}0.3$ and $1.2{\leq}z{\leq}2.3$.

In the compositional formula, M is a metal element containing niobium and/or titanium. M may contain a metal other than niobium and titanium. The metal other than niobium and titanium is preferably at least one metal selected from the group consisting of iron, lanthanum, tantalum, zirconium, hafnium, vanadium, molybdenum, chromium, tungsten, cobalt, nickel and copper; more preferably at least one metal selected from the group consisting of iron, lanthanum, tantalum, zirconium, hafnium and vanadium; still more preferably at least one metal selected from the group consisting of iron, lanthanum, tantalum and zirconium; particularly preferably at least one metal selected from the group consisting of iron, lanthanum and zirconium; extremely preferably at least one metal selected from the group consisting of iron and lanthanum.

In the case where a metal other than niobium and titanium is contained as a metal atom wherein niobium and/or titanium is represented by M1 and the metal atom other than niobium and titanium is represented by M2, the compositional formula of the metal-containing oxycarbonitride is preferably represented by $M1_{1-a}M2aC_xN_yO_z$, wherein 1-a, a, x, y and z are each a proportion of the number of atoms; $0<a\leq0.5$, $0.01\leq x\leq0.5$, $0.01\leq y\leq0.5$ and $0.5\leq z\leq2.5$.

In the compositional formula, more preferably, the following is satisfied: $0<a\leq0.45$, $0.1\leq x\leq0.5$, $0.05\leq y\leq0.4$ and $1.0\leq z\leq2.5$; still more preferably, the following is satisfied: $0<a\leq0.4$, $0.15\leq x\leq0.5$, $0.05\leq y\leq0.3$ and $1.2\leq z\leq2.3$.

The fuel cell catalyst comprising the metal-containing oxycarbonitride represented by such compositional formula tends to have high catalytic activity.

In the present invention, the fuel cell catalyst comprising the metal-containing oxycarbonitride that contains the metal M refers to a compound the compositional formula of which is represented by $MC_xN_yO_z$; or refers to a mixture that contains an oxide of the metal M, a carbide of the metal M, a nitride of the metal M, a carbonitride of the metal M, an oxycarbide of the metal M, an oxynitride of the metal M and the like, the compositional formula of the mixture being represented by $MC_xN_yO_z$ as a whole wherein the mixture may contain or may not contain a compound represented by $MC_xN_yO_z$; or refers to both of the compound and the mixture.

The content of the fuel cell catalyst used in the present invention in the ink is preferably 0.1 to 50% by mass, more preferably 0.1 to 45% by mass, still more preferably 0.1 to 40% by mass. The fuel cell catalyst layer formed by using the ink in which the content of the fuel cell catalyst is within the above range tends to have high catalytic activity.

A method for obtaining the metal-containing oxycarbonitride is not particularly limited. For example, a method of heating a metal-containing carbonitride in an inert gas containing an oxygen gas can be mentioned.

Hereinafter, the method of heating the metal-containing carbonitride in an inert gas containing an oxygen gas is described.

Examples of the inert gas include a nitrogen gas, a helium gas, a neon gas, an argon gas, a krypton gas, a xenon gas and a radon gas. A nitrogen gas or an argon gas is particularly preferable because of their relatively easy availability.

The concentration of the oxygen gas in the inert gas, which depends on heating time and heating temperature, is preferably 0.1 to 5% by volume, more preferably 0.1 to 2% by volume. The oxygen gas concentration in the above range tends to lead to the formation of a uniform oxycarbonitride. The oxygen gas concentration of less than 0.1% by volume tends to prevent the oxidation. The oxygen gas concentration of more than 5% by volume tends to make the oxidation proceed excessively.

The heating temperature is preferably 600 to 1200°C, more preferably 700 to 1100°C. The heating temperature in the above range tends to lead to the formation of a uniform oxycarbonitride. The heating temperature of lower than 600°C tends to prevent the oxidation from proceeding. The heating temperature of higher than 1200°C tends to make the oxidation proceed excessively.

The inert gas may contain a hydrogen gas. The concentration of the hydrogen gas, which depends on heating time and heating temperature, is preferably 0.01 to 4% by volume, more preferably 0.1 to 4% by volume. When the inert gas contains the hydrogen gas within the above range, the resultant fuel cell catalyst tends to have high catalytic activity. The hydrogen gas concentration of higher than 4% by volume tends to increase explosion risk.

In the present invention, the gas concentration (% by volume) is a value in terms of standard condition.

Examples of the heating method include a standing method, a stirring method, a dropping method and a powder capturing method.

Under the standing method, the metal-containing carbonitride placed in a stationary electric furnace or the like is heated. In another way of this method, an alumina board, a quartz board or the like on which the metal-containing carbonitride has been weighed is placed and heated. The standing method is preferable in terms of being able to heat a large amount of the metal-containing carbonitride.

Under the stirring method, the metal-containing carbonitride introduced into an electric furnace such as a rotary kiln is heated while being stirred. The stirring method is preferable in terms of being able to heat a large amount of the metal-containing carbonitride, and also in terms of being able to prevent the aggregation and growth of particles of the metal-containing carbonitride.

In the case where the method such as the standing method and the stirring method is carried out using a tubular furnace, the time for heating the metal-containing carbonitride is 0.1 to 20 hours, preferably 1 to 20 hours. The heating time in the above range tends to lead to the formation of a uniform oxycarbonitride. The heating time of less than 0.1 hour tends to lead to partial formation of an oxycarbonitride. The heating time of more than 20 hours tends to make the oxidation proceed excessively.

Under the dropping method, an induction furnace is heated to a predetermined heating temperature while flowing an inert gas containing a trace amount of an oxygen gas through the furnace; a thermal equilibrium is maintained at the temperature; and the metal-containing carbonitride is dropped and heated in a crucible which is a heating zone in the furnace. The dropping method is preferable in terms of being able to minimizing the aggregation and growth of particles of the metal-containing carbonitride.

In the dropping method, the time for heating the metal-containing carbonitride is usually 0.5 to 10 minutes, preferably 0.5 to 3 minutes. The heating time within the above range is preferable, leading to the tendency of the formation of a uniform oxycarbonitride. The heating time of less than 0.5 minute tends to lead to partial formation of an oxycarbonitride. The heating time of more than 10 minutes tends to make the oxidation proceed excessively.

Under the powder capturing method, the metal-containing carbonitride is caused to suspend as particles in an inert gas atmosphere containing a trace amount of an oxygen gas, and the metal-containing carbonitride is captured and heated in a vertical tubular furnace controlled at a predetermined heating temperature.

In the powder capturing method, the time for heating the metal-containing carbonitride is 0.2 second to 1 minute, preferably 0.2 to 10 seconds. The heating time within the above range is preferable, leading to the tendency of the formation of a uniform oxycarbonitride. The heating time of less than 0.2 second tends to lead to partial formation of an oxycarbonitride. The heating time of more than 1 minute tends to make the oxidation proceed excessively.

As the fuel cell catalyst used in the present invention, the metal-containing oxycarbonitride obtained by the above production method may be used as it is, but the resultant metal-containing oxycarbonitride may be disintegrated to provide a finer powder and this finer powder may be used.

An exemplary method for disintegrating the metal-containing oxycarbonitride employs a roll-rotating mill, a ball mill, a medium-stirring mill, a gas stream pulverizing machine, a mortar or a disintegrating tank. In particular, preferred is a method employing a planetary ball mill.

The fuel cell catalyst comprising the disintegrated metal-containing oxycarbonitride is in the form of finer particles, and thus tends to be suitably dispersed to form a uniform catalyst layer. The fuel cell catalyst comprising the disintegrated metal-containing oxycarbonitride has a larger BET specific surface area than the catalyst comprising the metal-containing oxycarbonitride that has not been disintegrated, and thus tends to have increased catalytic activity.

The BET specific surface area of the fuel cell catalyst used in the present invention is preferably 1 $m^2/g$ or more, more preferably 1 to 100 $m^2/g$, particularly preferably 20 to 100 $m^2/g$. The value of the BET specific surface area in the present invention is measurable using a commercially available BET measurement apparatus, with examples thereof including Micromeritics Gemini 2360 manufactured by Shimadzu Corporation.

The metal-containing oxycarbonitride preferably has a primary particle diameter of 5 nm to 1.5 $\mu$m, more preferably 5 nm to 1 $\mu$m, still more preferably 5 nm to 500 nm, particularly preferably 5 nm to 100 nm.

In the present invention, the primary particle diameter of the metal-containing oxycarbonitride is determined using a BET specific surface on the basis of the following equation (1).

$$d=6/(p \times S) \quad \ldots(1)$$

d: primary particle diameter ($\mu$m) of metal-containing oxycarbonitride
p: density (g/cm$^3$) of metal-containing oxycarbonitride
S: BET specific surface area (m$^2$/g) of metal-containing oxycarbonitride

In the present invention, for the calculation of the primary particle diameter "d" of the metal-containing oxycarbonitride, as the density "p" of the metal-containing oxycarbonitride, the density of a metal oxide that constitutes the metal-containing oxycarbonitride is used. In the case where plural kinds of oxides exist occurring in some metal atoms, the density of the most stable oxide is used as the density of the metal oxide. Specifically, when niobium is contained as a metal atom, the density of niobium(V) pentoxide ($Nb_2O_5$), 4.47 g/cm$^3$, is used; when titanium is contained as a metal atom, the density of titanium (IV) dioxide ($TiO_2$), 4. 27 g/cm$^3$, is used; when iron is contained as a metal atom, the density of triiron (II,III) tetraoxide ($Fe_3O_4$), 5.17 g/cm$^3$, is used; and when lanthanum is contained as a metal atom, the density of lanthanum(III) oxide ($La_2O_3$), 6.51 g/cm$^3$, is used.

In the case where the metal-containing oxycarbonitride contains plural kinds of metal atoms, the density of the metal oxide is the sum of densities each obtained by multiplying the density of each metal atom by the proportion of the number of atoms of each metal atom wherein the sum of the number of atoms is 1. For example, when the metal-containing oxycarbonitride contains niobium and iron at niobium: iron = 0.95:0.05 (proportion of the number of atoms), the density of the metal oxide to be used is 4.47 g/cm$^3$ × 0.95 + 5.17 g/cm$^3$ × 0.05 = 4.51 g/cm$^3$; and when the metal oxycarbonitride contains titanium and lanthanum at titanium:lanthanum = 0.98:0.02 (proportion of the number of atoms), the density of the metal oxide is 4.27 g/cm$^3$ × 0.98 + 6.51 g/cm$^3$ × 0.02 = 4.31 g/cm$^3$.

A method for obtaining the metal-containing carbonitride is not particularly limited. Exemplary methods include a method (I) in which a mixture of a metal oxide and carbon is heated in a nitrogen atmosphere or in a nitrogen-containing inert gas to produce the metal-containing carbonitride; and a method (II) in which a mixture of the metal-containing compound (for example, an organic acid salt, a chloride, a carbide, a nitride or a complex), a metal carbide and a metal nitride is heated in an inert gas such as a nitrogen gas to produce the metal-containing carbonitride.

The heating temperature in producing the metal-containing carbonitride is 600 to 1800°C, preferably 800 to 1600°C. The heating temperature being within the above range tends to lead to good crystallinity and uniformity. The heating temperature of lower than 600°C tends to lead to deteriorated crystallinity and uniformity. The heating temperature of higher than 1800°C tends to lead to easy sintering.

As the heating method, exemplary methods are a standing method, a stirring method, a dropping method and a powder capturing method as described above.

It is preferred that the metal-containing carbonitride obtained by the production method is pulverized. Examples of the method for pulverizing the metal-containing carbonitride include methods using a roll-rotating mill, a ball mill, a medium-stirring mill, a gas stream pulverizing machine, a mortar and a disintegrating tank. In view of facilitating the treatment in a small amount, the method using a mortar is preferable.

<Electron conductive material>

The electron conductive material used in the present invention is not particularly limited as long as generally used to form a fuel cell catalyst layer.

Specific examples of the electron conductive material include carbons, conductive polymers, conductive ceramics, metals and conductive inorganic oxides such as tungsten oxide and iridium oxide. These electron conductive materials may be used singly or in combination with two or more kinds. In particular, carbon particles having a large specific surface area, or a mixture of carbon particles having a large specific surface area and other electron conductive particles is preferable.

Examples of the carbons include carbon blacks, graphites, black leads, activated carbons, carbon nanotubes, carbon nanofibers, carbon nanohorns and fullerenes. The carbon preferably has a particle diameter of 10 to 1000 nm, more preferably 10 to 100 nm. If the particle diameter of carbon is less than 10 nm, the carbon cannot readily form an electron conductive path. If the particle diameter of carbon is more than the above upper limit, the fuel cell catalyst layer formed tends to have reduced gas diffusion properties, or the usage rate of the fuel cell catalyst tends to be lowered.

The conductive polymers are not particularly limited. Examples thereof include polyacetylene, poly-p-phenylene, polyaniline, polyalkylaniline, polypyrrole, polythiophene, polyindole, poly-1,5-diaminoanthraquinone, polyaminodiphenyl, poly(o-phenylenediamine), poly(quinolinium) salt, polypyridine, polyquinoxaline and polyphenylquinoxaline. Of these, polypyrrole, polyaniline and polythiophene are preferred, and polypyrrole is more preferred.

<Proton conductive material>

The proton conductive material used in the present invention is not particularly limited as long as generally used to form a fuel cell catalyst layer.

Specific examples of the proton conductive material include perfluorocarbon polymers having a sulfonic acid group (such as NAFION (registered trademark)), hydrocarbon polymer compounds having a sulfonic acid group, polymer compounds doped with inorganic acids such as phosphoric acid, organic/inorganic hybrid polymers partially substituted with proton conductive functional groups, and proton conductors composed of a polymer matrix impregnated with a phosphoric acid solution or a sulfuric acid solution. Of these, NAFION (registered trademark) is preferable. As a proton conductive material, the use of "Flemion" membrane manufactured by Asahi Glass Co., Ltd. or "Aciplex" membrane manufactured by Asahi Kasei Corporation tends to allow the reaction in the fuel cell to proceed even under high temperature and low humidity conditions.

<Solvent>

The solvent used in the present invention is not particularly limited as long as generally used to form a fuel cell catalyst layer. Examples thereof include volatile organic solvents and water.

Specific examples of the solvent include alcohol solvents, ether solvents, halogen solvents, aromatic solvents and water. Of these, preferred are alcohols having 1 to 4 carbon atoms. Specifically, methanol, ethanol, 1-propanol, 2-propanol, 1-butanol, 2-butanol, isobutanol and t-butanol are preferable. In particular, 2-propanol is preferable. These solvents may be used singly or may be used in combination of two or more kinds.

The content of the solvent used in the present invention in the ink is preferably 30 to 99% by mass, more preferably 50 to 99% by mass, still more preferably 70 to 99% by mass. The content of the solvent within the above range tends to allow the ink to be uniformly applied.

<Production process of ink>

The ink of the present invention is produced by, for example, mixing the aforementioned fuel cell catalyst, the electron conductive material, the proton conductive material and the solvent. The mixing order of the fuel cell catalyst, the electron conductive material, the proton conductive material and the solvent is not particularly limited. For example, the fuel cell catalyst, the electron conductive material, the proton conductive material and the solvent may be mixed sequentially or simultaneously to disperse components such as the fuel cell catalyst in the solvent and thereby prepare the ink. In another embodiment, a solid proton conductive material may be previously mixed with water and/or an alcohol solvent such as methanol, ethanol and propanol to prepare a solution, and then this solution may be mixed with the fuel cell catalyst, the electron conductive material and the solvent.

The mixing time is appropriately selectable in view of a mixing means, dispersibility of components such as the fuel cell catalyst, volatility of the solvent and the like.

As a mixing means, a stirring apparatus such as a homogenizer may be used. A ball mill, a bead mill, a jet mill, an ultrasonic wave dispersion apparatus or the like may be used. These means may be combined. Of these, the mixing means using the ultrasonic wave dispersion apparatus is preferable. If necessary, the mixing may be performed while using a system or an apparatus that keeps the temperature of the ink within a specific range.

Fuel cell catalyst layer

The fuel cell catalyst layer of the present invention is formed by using the ink. The fuel cell catalyst layer formed by using the ink is excellent in durability and has high catalytic activity.

The fuel cell catalyst layer may be formed by any methods without limitation. For example, the ink may be applied to an electrolyte membrane and/or a gas diffusion layer, described later, and dried. In another embodiment, the ink may be applied on a transfer substrate and dried to form a fuel cell catalyst layer on the transfer substrate, and the fuel cell catalyst layer may be transferred to an electrolyte membrane and/or a gas diffusion layer.

The applying methods include dipping, screen printing, roll coating and spraying.

The drying method is not particularly limited. Examples thereof include a heating method with a heater.

The drying temperature is preferably 40 to 100°C, more preferably 60 to 100°C, still more preferably 80 to 100°C.

The applying and the drying may be performed simultaneously. In this case, it is preferred that the applying amount and the drying temperature are controlled in order that the drying is completed immediately after the applying.

The mass of the fuel cell catalyst per unit area in the fuel cell catalyst layer is preferably 2.5 to 4.3 mg/cm$^2$, more preferably 3.3 to 4.1 mg/cm$^2$, still more preferably 3.7 to 4.0 mg/cm$^2$. When the mass of the fuel cell catalyst per unit area is within the above range, the catalytic activity tends to be high.

Uses

The fuel cell catalyst layer of the present invention is effectively employable as a catalyst layer alternative to a platinum catalyst layer.

The fuel cell catalyst layer of the present invention may be used as an anode catalyst layer or a cathode catalyst layer. The fuel cell catalyst layer of the present invention has excellent durability and high oxygen reducing activity, and thus is preferably used as a cathode catalyst layer, particularly as a cathode catalyst layer of a membrane electrode assembly in a polymer electrolyte fuel cell.

The electrode of the present invention comprises the fuel cell catalyst layer and a gas diffusion layer.

The electrode of the present invention may be used as a cathode or an anode. The electrode of the present invention, having excellent durability and high oxygen reducing activity, is suitably used as a cathode, leading to high industrial advantage.

The gas diffusion layer, which is a layer for diffusing a gas, is not particularly limited as long as having electron conductivity, high gas diffusion properties and high corrosion resistance. As the gas diffusion layer, carbon-based porous materials such as carbon paper and carbon cloth, and stainless steel and anticorrosive-coated aluminum foils for weight reduction are generally used.

The membrane electrode assembly of the present invention comprises a cathode, an anode and an electrolyte membrane interposed between the cathode and the anode, wherein the cathode is the electrode as described above.

The membrane electrode assembly is obtainable by forming the fuel cell catalyst layer on the electrolyte membrane and/or the gas diffusion layer and hot pressing in such a state that both surfaces of the electrolyte membrane are held by the gas diffusion layer, with the catalyst layer facing inward.

The temperature in hot pressing, which is appropriately selected depending on an electrolyte membrane to be used and/or components in the catalyst layer, is preferably 100 to 160°C, more preferably 120 to 160°C, still more preferably 120 to 140°C. If the temperature in hot pressing is lower than the lower limit, assembling may be insufficient. If the temperature in hot pressing is higher than the upper limit, the electrolyte membrane and/or components in the catalyst layer may be deteriorated.

The pressure in hot pressing, which is appropriately selected depending on an electrolyte membrane to be used and/or components in the catalyst layer and a gas diffusion layer, is preferably 1 to 10 MPa, more preferably 1 to 6 MPa, still more preferably 2 to 5 MPa. If the pressure in hot pressing is less than the lower limit, assembling may be insufficient. If the pressure in hot pressing is more than the upper limit, the porosity of the catalyst layer and the gas diffusion layer may be decreased, which may lead to deteriorated performance.

The hot pressing time, which is appropriately selected depending on the temperature and the pressure in hot pressing, is preferably 1 to 20 minutes, more preferably 3 to 20 minutes, still more preferably 5 to 20 minutes.

The catalytic activity in the membrane electrode assembly can be evaluated, for example, based on a maximum power density as calculated below.

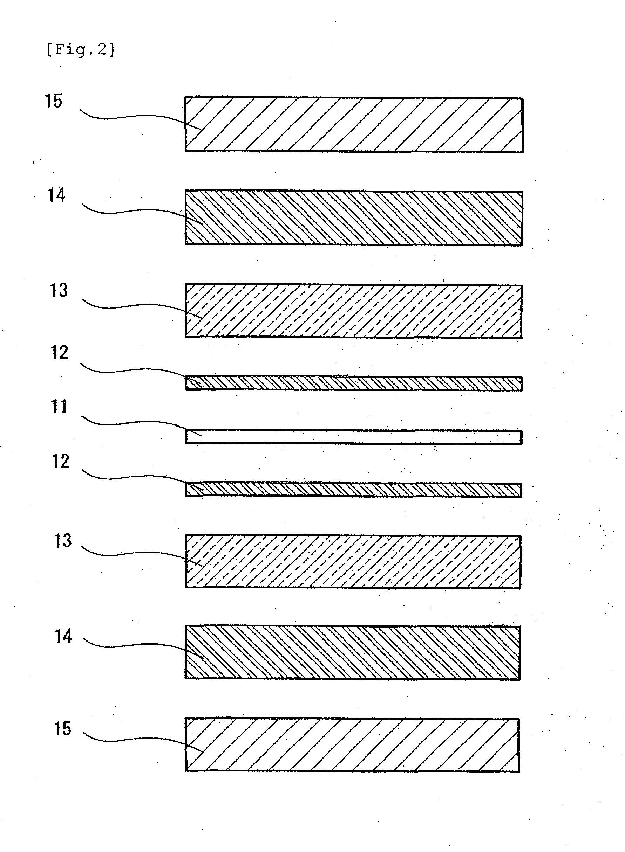

At first, the membrane electrode assembly is held by sealing materials (gaskets), separators having a gas flow passage and collectors, and fixed with a bolt and secured such that the pressure of contacted surface becomes a prescribed value (4N), to thereby prepare a single cell of a polymer electrolyte fuel cell (see Fig 2).

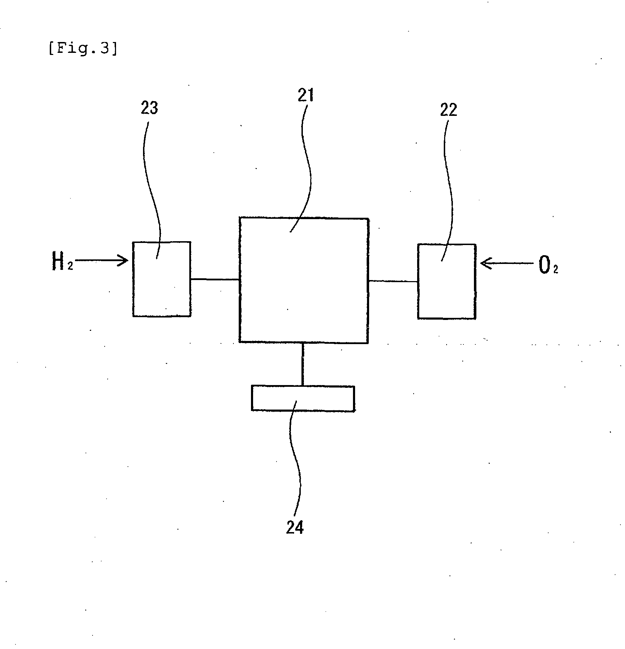

To the anode side, hydrogen is supplied as a fuel at a flow rate of 1 L/min, and to the cathode side, oxygen is supplied as an oxidizing agent at a flow rate of 2 L/min. While applying a back pressure of 300 kPa to both the sides, the current-voltage property at a temperature of 90 °C of the single cell is measured (see Fig. 3). From the current-voltage property curve obtained, a maximum power density is calculated. The larger the maximum power density is, the higher the catalytic activity of the membrane electrode assembly is. The maximum power density is preferably not less than 50 mW/cm$^2$, more preferably not less than 100 mW/cm$^2$, still more preferably not less than 200 mW/cm$^2$.

As the electrolyte membranes, for example, a perfluorosulfonic acid electrolyte membrane or a hydrocarbon electrolyte membrane is generally used. A polymer microporous membrane impregnated with a liquid electrolyte, or a porous membrane filled with a polymer electrolyte may be used.

The fuel cell of the present invention comprises the membrane electrode assembly as described above.

The electrode reaction in fuel cells takes place at a so-called three-phase interface (electrolyte-electrode catalyst-reaction gas). The fuel cells are classified according to an electrolytes used, into several types such as molten carbonate fuel cells (MCFC), phosphoric acid fuel cells (PAFC), solid oxide fuel cells (SOFC) and polymer electrolyte fuel cells (PEFC). In particular, the membrane electrode assembly of the present invention is preferably used for the polymer electrolyte fuel cells.

Examples

The present invention will be described based on examples hereinbelow without limiting the scope of the present invention.

In Examples and Comparative Examples, measurements were carried out by the following methods.

[Analytical methods]

1. Elemental Analysis

Carbon: Approximately 0.01 g of a sample was weighed and analyzed with a carbon sulfur analyzer (EMIA-920V manufactured by HORIBA, Ltd.).

Nitrogen and oxygen: Approximately 0.01 g of a sample was weighed and sealed in a Ni capsule, and this was analyzed with an oxygen nitrogen analyzer (TC600 manufactured by LECO JAPAN CORPORATION).

Metals (niobium, titanium, iron, lanthanum): Approximately 0.1 g of a sample was weighed in a quartz beaker, and was completely thermal-decomposed using a sulfuric acid, a nitric acid and a hydrofluoric acid. This solution was cooled and was collected to a volume of 100 mL. This was appropriately diluted and quantitatively analyzed with ICP-OES (VISTA-PRO manufactured by SII) or with ICP-MS (HP7500 manufactured by Agilent)

2. BET Specific Surface Area Measurement

BET specific surface area was measured using Micromeritics Gemini 2360 manufactured by Shimadzu Corporation.

3. Primary particle diameter

The primary particle diameter of the fuel cell catalyst comprising the metal-containing oxycarbonitride was determined on the basis of the following equation (1), from a BET specific surface area, and a density of a metal oxide obtained in view of a proportion of the number of atoms of each metal element. The proportion of the number of atoms of each metal element was determined by elemental analysis.

$$d=6/(p×S) \quad …(1)$$

d: primary particle diameter ($\mu$m) of the fuel cell catalyst comprising the metal-containing oxycarbonitride
p: density (g/cm$^3$) of the fuel cell catalyst comprising the metal-containing oxycarbonitride
S: BET specific surface area (m$^2$/g) of the fuel cell catalyst comprising the metal-containing oxycarbonitride

[Reference Example 1]

1. Preparation of anode ink

0.6 g of platinum-supporting carbon (TEC10E60E, manufactured by TANAKA KIKINZOKU KOGYO K.K.) was added to 50 mL of pure water. Further, 5 g of an aqueous solution (aqueous 5% Nafion solution, manufactured by Wako Pure Chemical Industries, Ltd.) containing a proton conductive material (NAFION (registered trade name); 0.25 g) was added. These were mixed with an ultrasonic wave dispersion machine (UT-106H, manufactured by Sharp Manufacturing Systems Corporation) for 1 hour, to prepare an anode ink (1).

2. Preparation of electrode having anode catalyst layer

A gas diffusion layer (carbon paper TGP-H-060, manufactured by TORAY INDUSTRIES INC.) was immersed in acetone for 30 seconds and degreased, and dried. Then, the gas diffusion layer was immersed in an aqueous 10% polytetrafluoroethylene (hereinafter also referred to as "PTFE") solution for 30 seconds. This was dried at room temperature, and was heated at 350°C for 1 hour, to provide a water-repellent gas diffusion layer having PTFE dispersed in the carbon paper (hereinafter also referred to as "GDL").
The above GDL was formed into the size of 5 cm $\times$ 5 cm, and the surface thereof was coated with the anode ink (1) prepared in the above item 1 using an automatic spray-coating apparatus (manufactured by SAN-EI TECH Ltd.) at 80°C. By repeating the spray-coating, an electrode having an anode catalyst layer (1) in which the amount of platinum (Pt) per unit area was 1 mg/cm$^2$ was prepared.

[Example 1]

1. Preparation of fuel cell catalyst

5.88 g (56 mmol) of niobium carbide (NbC, manufactured by SOEGAWA CHEMICAL CO., LTD.), 0.87 g (5 mmol) of iron acetate (Fe(CH$_3$CO$_2$)$_2$, manufactured by ALDRICH) and 5.14 g (48 mmol) of niobium nitride (NbN, manufactured by Koj undo Chemical Lab., Co., Ltd.) were sufficiently mixed with one another. This mixed powder was heated in a tubular furnace at 1600 °C for 3 hours in a nitrogen atmosphere, to provide 10.89 g of a carbonitride (1) that contained iron and niobium. The resultant carbonitride (1), which was a sintered product, was pulverized with a mortar.
While flowing a nitrogen gas containing 0.75% by volume of an oxygen gas and 4% by volume of a hydrogen gas, 1.05 g of the pulverized carbonitride (1) was heated in a rotary kiln at 900°C for 7 hours, to provide 1.18 g of an oxycarbonitride (hereinafter also referred to as a "fuel cell catalyst (1)") that contained iron and niobium. The result of elemental analysis of the fuel cell catalyst (1) is shown in Table 1.
The fuel cell catalyst (1) had a BET specific surface area of 4.2 m$^2$/g, and the fuel cell catalyst (1) had a primary particle diameter of 317 nm.

2. Preparation of ink

0.237 g of the fuel cell catalyst (1) prepared in the above item 1 and 0.1183 g of carbon black as an electron conductive material (ketjen black EC300J, manufactured by LION Corporation) were added to 50 mL of 2-propanol (manufactured by Wako Pure Chemical Industries, Ltd.). Further, 2.84 g of an aqueous solution (aqueous 5% Nafion solution, manufactured by Wako Pure Chemical Industries, Ltd.) containing a proton conductive material (NAFION (registered trade name); 0.142 g) was added. These were mixed with an ultrasonic wave dispersion machine (UT-106H, manufactured by Sharp Manufacturing Systems Corporation) for 1 hour, to prepare a cathode ink (1).

3. Preparation of electrode having fuel cell catalyst layer

A gas diffusion layer (carbon paper TGP-H-060, manufactured by TORAY INDUSTRIES INC.) was immersed in acetone for 30 seconds and degreased, and dried. Then, the gas diffusion layer was immersed in an aqueous 10% polytetrafluoroethylene (hereinafter also referred to as "PTFE") solution for 30 seconds. This was dried at room temperature, and was heated at 350°C for 1 hour, to provide a water-repellent gas diffusion layer having PTFE dispersed in the carbon paper (hereinafter also referred to as "GDL").

The above GDL was formed into the size of 5 cm $\times$ 5 cm. The surface thereof was coated with the cathode ink (1) prepared in the above item 2 using an automatic spray-coating apparatus (manufactured by SAN-EI TECH Ltd.) at 80°C. By repeating the spray-coating, an electrode having a cathode catalyst layer (1) in which the total amount of the fuel cell catalyst (1) and carbon black per unit area was 5 mg/cm$^2$ was prepared. The mass of the fuel cell catalyst (1) per unit area in the cathode catalyst layer (1) was 3.3 mg/cm$^2$.

4. Preparation of membrane electrode assembly (hereinafter also referred to as "MEA")

As an electrolyte membrane, a Nafion membrane N-117 (manufactured by DuPont) was used. As a cathode, the electrode having the cathode catalyst layer (1) on the surface of GDL prepared in the above item 3 was used. As an anode, the electrode having the anode catalyst layer (1) on the surface of GDL prepared in Reference Example 1 was used.

MEA (1) comprising the electrolyte membrane interposed between the cathode and the anode was prepared in such a manner as described below.

At first, the electrolyte membrane was heated in a 3% hydrogen peroxide solution at 80°C for 1 hour, and then heated in pure water at 80°C for 1 hour. Then, the electrolyte membrane was heated in a 1 M aqueous sulfuric acid solution at 80°C for 1 hour, and then heated in pure water at 80°C for 1 hour.

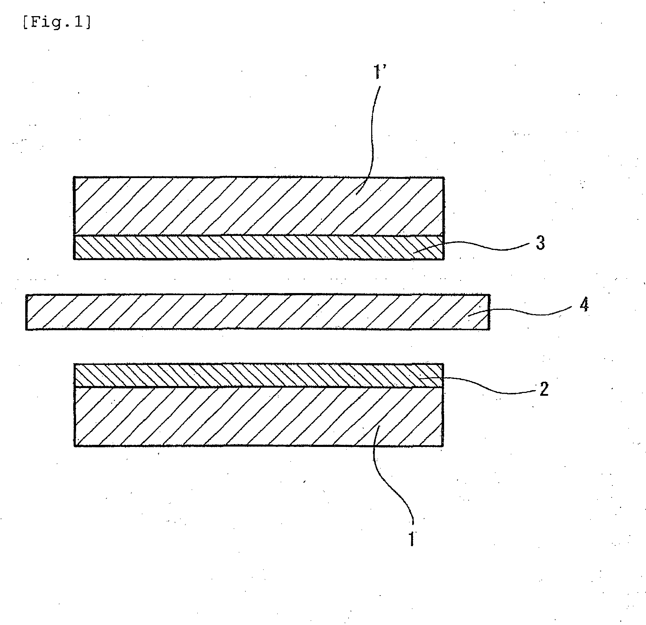

The electrolyte membrane, from which moisture was thus removed, was held between the cathode and the anode, and thermally compressed with the cathode catalyst layer (1) and anode catalyst layer (1) adhering to the electrolyte membrane by using a hot pressing machine at 140°C at 3 MPa for 6 minutes, to prepare MEA (1) (see Fig. 1).

5. Preparation of single cell

As shown in Fig. 2, MEA (1) prepared in the above item 4 was held by two sealing materials (gaskets), two separators each having a gas flow passage, two collectors and two rubber heaters, and fixed with a bolt and secured such that the pressure of contacted surface would be a prescribed value (4N), to thereby prepare a single cell (1) (25 cm$^2$) of a polymer electrolyte fuel cell.

6. Evaluation of power generation property (measurement of catalytic activity)

The temperature of the single cell (1) prepared in the above item 5, the temperature of an anode humidifier and the temperature of a cathode humidifier were regulated to be 90°C, 95°C and 65°C, respectively. To the anode side, hydrogen was supplied as a fuel at a flow rate of 1 L/min, and to the cathode side, oxygen was supplied as an oxidizing agent at a flow rate of 2 L/min. While applying a back pressure of 300 kPa to both the sides, the current-voltage property of the single cell (1) was measured (see Fig. 3). From the current-voltage property curve obtained, a maximum power density was calculated. The higher the maximum power density is, the higher the catalytic activity in MEA is. MEA (1) had a catalytic activity, i.e., a maximum power density, of 63 mW/cm$^2$.

[Example 2]

1. Preparation of fuel cell catalyst

The fuel cell catalyst (1) prepared in Example 1, item 1 was disintegrated with a planetary ball mill (Premium7 manufactured by FRITSCH, rotating radius: 2.3 cm, orbital radius: 16.3 cm) in such a manner as described below.

Into a sealable zirconia mill container (volume: 45 mL, inner diameter: 45 mm), 0.9 g of the fuel cell catalyst (1), 40 g of zirconia ball having a diameter of 0.5 mm (manufactured by NIKKATO Corporation) and 7 mL of acetonitrile (dispersion solvent) were introduced. The zirconia mill container was sealed and sufficiently purged with argon.

Then, the fuel cell catalyst (1) was disintegrated under conditions: the number of rotating revolution: 700 rpm, the number of orbital revolution: 350 rpm, rotating centrifugal acceleration: 12.6 G, orbital centrifugal acceleration: 22.3 G, disintegrating time: 5 minutes. The catalyst thus disintegrated was provided as a fuel cell catalyst (2).

After the disintegrating, the whole zirconia mill container was cooled with water. After the water cooling, acetonitrile and the fuel cell catalyst (2) were separated from zirconia ball. Further, using a rotary evaporator, from acetonitrile and the fuel cell catalyst (2), acetonitrile was removed, to collect the fuel cell catalyst (2). The fuel cell catalyst (2) had a BET specific surface area of 30 $m^2/g$ and the fuel cell catalyst (2) had a primary particle diameter of 44 nm.

2. Preparation of ink

0.284 g of the fuel cell catalyst (2) prepared in the above item 1 and 0.071 g of carbon black as an electron conductive material (ketjen black EC300J, manufactured by LION Corporation) were added to 50 mL of 2-propanol (manufactured by Wako Pure Chemical Industries, Ltd.). Further, 2.84 g of an aqueous solution (aqueous 5% Nafion solution, manufactured by Wako Pure Chemical Industries, Ltd.) containing a proton conductive material (NAFION (registered trade name); 0.142 g) was added. These were mixed with an ultrasonic wave dispersion machine (UT-106H, manufactured by Sharp Manufacturing Systems Corporation) for 1 hour, to prepare a cathode ink (2).

3. Preparation of electrode having fuel cell catalyst layer

The operation was performed in the same manner as in Example 1, item 3, except that the cathode ink (1) was replaced with the cathode ink (2), to prepare an electrode having a cathode catalyst layer (2). The mass of the fuel cell catalyst (2) per unit area in the cathode catalyst layer (2) was 4.0 $mg/cm^2$.

4. Preparation of MEA

The operation was performed in the same manner as in Example 1, item 4, except that the electrode having a cathode catalyst layer (1) was replaced with the electrode having a cathode catalyst layer (2), to prepare MEA (2).

5. Preparation of single cell

The operation was performed in the same manner as in Example 1, item 5, except that MEA (1) was replaced with MEA (2), to prepare a single cell (2) of a polymer electrolyte fuel cell.

6. Evaluation of power generation property (measurement of catalytic activity)

The operation was performed in the same manner as in Example 1, item 6, except that the single cell (1) was replaced with the single cell (2), to measure current-voltage property and calculate a maximum power density of the single cell (2). MEA (2) had a catalytic activity, i.e., a maximum power density, of 198 $mW/cm^2$.

[Example 3]

1. Preparation of fuel cell catalyst

4 g (50 mmol) of titanium oxide ($TiO_2$), 1.5 g (125 mmol) of carbon black (XC-72, manufactured by Cabot Corporation) and 0.16 g (0.5 mmol) of lanthanum oxide ($La_2O_3$) were sufficiently mixed with one another. This mixture was heated at 1700°C for 3 hours in a nitrogen atmosphere, to provide 2.7 g of a carbonitride (2) that contained titanium and lanthanum. This carbonitride (2), which was a sintered product, was pulverized with a mortar.

While flowing a nitrogen gas containing 1% by volume of an oxygen gas and 1% by volume of a hydrogen gas, 1.0 g of the pulverized carbonitride (2) was heated in a tubular furnace at 900°C for 4 hours, to provide 1.18 g of an oxycarbonitride (hereinafter also referred to as a "fuel cell catalyst (3)") that contained titanium and lanthanum. The result of elemental analysis of the fuel cell catalyst (3) is shown in Table 1.

The fuel cell catalyst (3) had a BET specific surface area of 11 $m^2/g$, and the fuel cell catalyst (3) had a primary particle diameter of 127 nm.

2. Preparation of ink

0.237 g of the fuel cell catalyst (3) prepared in the above item 1 and 0.1183 g of carbon black as an electron conductive material (ketjen black EC300J, manufactured by LION Corporation) were added to 50 mL of 2-propanol (manufactured by Wako Pure Chemical Industries, Ltd.). Further, 2.84 g of an aqueous solution (aqueous 5% Nafion solution, manufactured by Wako Pure Chemical Industries, Ltd.) containing a proton conductive material (NAFION (registered trade name); 0.142 g) was added. These were mixed with an ultrasonic wave dispersion machine (UT-106H, manufactured by Sharp Manufacturing Systems Corporation) for 1 hour, to prepare a cathode ink (3).

3. Preparation of electrode having fuel cell catalyst layer

The operation was performed in the same manner as in Example 1, item 3, except that the cathode ink (1) was replaced with the cathode ink (3), to prepare an electrode having a cathode catalyst layer (3). The mass of the fuel cell catalyst (3) per unit area in the cathode catalyst layer (3) was 3.3 mg/cm$^2$.

4. Preparation of MEA

The operation was performed in the same manner as in Example 1, item 4, except that the electrode having a cathode catalyst layer (1) was replaced with the electrode having a cathode catalyst layer (3), to prepare MEA (3).

5. Preparation of single cell

The operation was performed in the same manner as in Example 1, item 5, except that MEA (1) was replaced with MEA (3), to prepare a single cell (3) of a polymer electrolyte fuel cell.

6. Evaluation of power generation property (measurement of catalytic activity)

The operation was performed in the same manner as in Example 1, item 6, except that the single cell (1) was replaced with the single cell (3), to measure current-voltage property and calculate a maximum power density of the single cell (3). MEA (3) had a catalytic activity, i.e., a maximum power density, of 121 mW/cm$^2$.

[Example 4]

1. Preparation of fuel' cell catalyst

The operation was performed in the same manner as in Example 2, item 1, except that the fuel cell catalyst (1) was replaced with the fuel cell catalyst (3), to disintegrate the fuel cell catalyst (3). The disintegrated catalyst was prepared as a fuel cell catalyst (4). The fuel cell catalyst (4) had a BET specific surface area of 45 m$^2$/g, and the fuel cell catalyst (4) had a primary particle diameter of 31 nm.

2. Preparation of ink

The operation was performed in the same manner as in Example 2, item 2, except that the fuel cell catalyst (2) was replaced with the fuel cell catalyst (4), to prepare a cathode ink (4).

3. Preparation of electrode having fuel cell catalyst layer

The operation was performed in the same manner as in Example 1, item 3, except that the cathode ink (1) was replaced with the cathode ink (4), to prepare an electrode having a cathode catalyst layer (4). The mass of the fuel cell catalyst (4) per unit area in the cathode catalyst layer (4) was 4.0 mg/cm$^2$.

4. Preparation of MEA

The operation was performed in the same manner as in Example 1, item 4, except that the electrode having a cathode catalyst layer (1) was replaced with the electrode having a cathode catalyst layer (4), to prepare MEA (4).

5. Preparation of single cell

The operation was performed in the same manner as in Example 1, item 5, except that MEA (1) was replaced with MEA (4), to prepare a single cell (4) of a polymer electrolyte fuel cell.

6. Evaluation of power generation property (measurement of catalytic activity)

The operation was performed in the same manner as in Example 1, item 6, except that the single cell (1) was replaced with the single cell (4), to measure current-voltage property and calculate a maximum power density of the single cell (4). MEA (4) had a catalytic activity, i.e., a maximum power density, of 293 mW/cm$^2$.

[Comparative Example 1]

1. Preparation of ink

0.1183 g of the fuel cell catalyst (2) prepared in Example 2, item 1 and 0.237 g of carbon black as an electron conductive material (ketjen black EC300J, manufactured by LION Corporation) were added to 50 mL of 2-propanol (manufactured by Wako Pure Chemical Industries, Ltd.). Further, 2.84 g of an aqueous solution (aqueous 5% Nafion solution, manufactured by Wako Pure Chemical Industries, Ltd.) containing a proton conductive material (NAFION (registered trade name); 0.142 g) was added. These were mixed with an ultrasonic wave dispersion machine (UT-106H, manufactured by Sharp Manufacturing Systems Corporation) for 1 hour, to prepare a cathode ink (5).

2. Preparation of electrode having fuel cell catalyst layer

The operation was performed in the same manner as in Example 1, item 3, except that the cathode ink (1) was replaced with the cathode ink (5), to prepare an electrode having a cathode catalyst layer (5). The mass of the fuel cell catalyst (5) per unit area in the cathode catalyst layer (5) was 1.67 mg/cm$^2$.

3. Preparation of MEA

The operation was performed in the same manner as in Example 1, item 4, except that the electrode having a cathode catalyst layer (1) was replaced with the electrode having a cathode catalyst layer (5), to prepare MEA (5).

4. Preparation of single cell

The operation was performed in the same manner as in Example 1, item 5, except that MEA (1) was replaced with MEA (5), to prepare a single cell (5) of a polymer electrolyte fuel cell.

5. Evaluation of power generation property (measurement of catalytic activity)

The operation was performed in the same manner as in Example 1, item 6, except that the single cell (1) was replaced with the single cell (5), to measure current-voltage property and calculate a maximum power density of the single cell (5). MEA (5) had a catalytic activity, i.e., a maximum power density, of 32 mW/cm$^2$.

[Comparative Example 2]

2. Preparation of ink

0.311 g of the fuel cell catalyst (2) prepared in Example 2, item 1 and 0.044 g of carbon black as an electron conductive material (ketjen black EC300J, manufactured by LION Corporation) were added to 50 mL of 2-propanol (manufactured by Wako Pure Chemical Industries, Ltd.). Further, 2.84 g of an aqueous solution (aqueous 5% Nafion solution, manufactured by Wako Pure Chemical Industries, Ltd.) containing a proton conductive material (NAFION (registered trade name); 0.142 g) was added. These were mixed with an ultrasonic wave dispersion machine (UT-106H, manufactured by Sharp Manufacturing Systems Corporation) for 1 hour, to prepare a cathode ink (6).

2. Preparation of electrode having fuel cell catalyst layer

The operation was performed in the same manner as in Example 1, item 3, except that the cathode ink (1) was replaced with the cathode ink (6), to prepare an electrode having a cathode catalyst layer (6). The mass of the fuel cell catalyst (2) per unit area in the cathode catalyst layer (6) was 4.38 mg/cm$^2$.

3. Preparation of MEA

The operation was performed in the same manner as in Example 1, item 4, except that the electrode having a cathode catalyst layer (1) was replaced with the electrode having a cathode catalyst layer (6), to prepare MEA (6).

4. Preparation of single cell

The operation was performed in the same manner as in Example 1, item 5, except that MEA (1) was replaced with MEA (6), to prepare a single cell (6) of a polymer electrolyte fuel cell.

5. Evaluation of power generation property (measurement of catalytic activity)

The operation was performed in the same manner as in Example 1, item 6, except that the single cell (1) was replaced with the single cell (6), to measure current-voltage property and calculate a maximum power density of the single cell (6). MEA (6) had a catalytic activity, i.e., a maximum power density, of 102 mW/cm$^2$.

[Comparative Example 3]

1. Preparation of ink

0.284 g of the fuel cell catalyst (2) prepared in Example 2, item 1 and 0.071 g of carbon black as an electron conductive material (ketjen black EC300J, manufactured by LION Corporation) were added to 50 mL of 2-propanol (manufactured by Wako Pure Chemical Industries, Ltd.). Further, 2.84 g of an aqueous solution (aqueous 5% Nafion solution, manufactured by Wako Pure Chemical Industries, Ltd.) containing a proton conductive material (NAFION (registered trade name); 0.036 g) was added. These were mixed with an ultrasonic wave dispersion machine (UT-106H, manufactured by Sharp Manufacturing Systems Corporation) for 1 hour, to prepare a cathode ink (7).

2. Preparation of electrode having fuel cell catalyst layer

The operation was performed in the same manner as in Example 1, item 3, except that the cathode ink (1) was replaced with the cathode ink (7), to prepare an electrode having an cathode catalyst layer (7). The mass of the fuel cell catalyst (2) per unit area in the cathode catalyst layer (7) was 4.0 mg/cm$^2$.

3. Preparation of MEA

The operation was performed in the same manner as in Example 1, item 4, except that the electrode having a cathode catalyst layer (1) was replaced with the electrode having a cathode catalyst layer (7), to prepare MEA (7).

4. Preparation of single cell

The operation was performed in the same manner as in Example 1, item 5, except that MEA (1) was replaced with MEA (7), to prepare a single cell (7) of a polymer electrolyte fuel cell.

5. Evaluation of power generation property (measurement of catalytic activity)

The operation was performed in the same manner as in Example 1, item 6, except that the single cell (1) was replaced with the single cell (7), to measure current-voltage property and calculate a maximum powers density of the single cell (7). MEA (7) had a catalytic activity, i.e., a maximum power density, of 53 mW/cm$^2$.

[Comparative Example 4]

1. Preparation of ink

0.284 g of the fuel cell catalyst (2) prepared in Example 2, item 1 and 0.071 g of carbon black as an electron conductive material (ketjen black EC300J, manufactured by LION Corporation) were added to 50 mL of 2-propanol (manufactured by Wako Pure Chemical Industries, Ltd.). Further, 2.84 g of an aqueous solution (aqueous 5% Nafion solution, manufactured by Wako Pure Chemical Industries, Ltd.) containing a proton conductive material (NAFION (registered trade name); 0.284 g) was added. These were mixed with an ultrasonic wave dispersion machine (UT-106H, manufactured by Sharp Manufacturing Systems Corporation) for 1 hour, to prepare a cathode ink (8).

2. Preparation of electrode having fuel cell catalyst layer

The operation was performed in the same manner as in Example 1, item 3, except that the cathode ink (1) was replaced with the cathode ink (8), to prepare an electrode having a cathode catalyst layer (8). The mass of the fuel cell catalyst (2) per unit area in the cathode catalyst layer (8) was 4.0 mg/cm$^2$.

3. Preparation of MEA

The operation was performed in the same manner as in Example 1, item 4, except that the electrode having a cathode catalyst layer (1) was replaced with the electrode having a cathode catalyst layer (8), to prepare MEA (8).

4. Preparation of single cell

The operation was performed in the same manner as in Example 1, item 5, except that MEA (1) was replaced with MEA (8), to prepare a single cell (8) of a polymer electrolyte fuel cell.

5. Evaluation of power generation property (measurement of catalytic activity)

The operation was performed in the same manner as in Example 1, item 6, except that the single cell (1) was replaced with the single cell (8), to measure current-voltage property and calculate a maximum power density of the single cell (8). MEA (8) had a catalytic activity, i.e., a maximum power density, of 57 mW/cm$^2$.

[Comparative Example 5]

1. Preparation of ink

0.1183 g of the fuel cell catalyst (4) prepared in Example 4, item 1 and 0.237 g of carbon black as an electron conductive material (ketjen black EC300J, manufactured by LION Corporation) were added to 50 mL of 2-propanol (manufactured by Wako Pure Chemical Industries, Ltd.). Further, 2.84 g of an aqueous solution (aqueous 5% Nafion solution, manufactured by Wako Pure Chemical Industries, Ltd.) containing a proton conductive material (NAFION (registered trade name); 0.142 g) was added. These were mixed with an ultrasonic wave dispersion machine (UT-106H, manufactured by Sharp Manufacturing Systems Corporation) for 1 hour, to prepare a cathode ink (9).

2. Preparation of electrode having fuel cell catalyst layer

The operation was performed in the same manner as in Example 1, item 3, except that the cathode ink (1) was replaced with the cathode ink (9), to prepare an electrode having a cathode catalyst layer (9). The mass of the fuel cell catalyst (4) per unit area in the cathode catalyst layer (9) was 1.67 mg/cm$^2$.

3. Preparation of MEA

The operation was performed in the same manner as in Example 1, item 4, except that the electrode having a cathode catalyst layer (1) was replaced with the electrode having a cathode catalyst layer (9), to prepare MEA (9).

4. Preparation of single cell

The operation was performed in the same manner as in Example 1, item 5, except that MEA (1) was replaced with MEA (9), to prepare a single cell (9) of a polymer electrolyte fuel cell.

5. Evaluation of power generation property (measurement of catalytic activity)

The operation was performed in the same manner as in Example 1, item 6, except that the single cell (1) was replaced with the single cell (9), to measure current-voltage property and calculate a maximum power density of the single cell (9). MEA (9) had a catalytic activity, i.e., a maximum power density, of 43 mW/cm$^2$.

[Comparative Example 6]

1. Preparation of ink

0.311 g of the fuel cell catalyst (4) prepared in Example 4, item 1 and 0.044 g of carbon black as an electron conductive material (ketjen black EC300J, manufactured by LION Corporation) were added to 50 mL of 2-propanol (manufactured by Wako Pure Chemical Industries, Ltd.). Further, 2.84 g of an aqueous solution (aqueous 5% Nafion solution, manufactured by Wako Pure Chemical Industries, Ltd.) containing a proton conductive material (NAFION (registered trade name); 0.142 g) was added. These were mixed with an ultrasonic wave dispersion machine (UT-106H, manufactured by Sharp Manufacturing Systems Corporation) for 1 hour, to prepare a cathode ink (10).

2. Preparation of electrode having fuel cell catalyst layer

The operation was performed in the same manner as in Example 1, item 3, except that the cathode ink (1) was replaced with the cathode ink (10), to prepare an electrode having a cathode catalyst layer (10). The mass of the fuel cell catalyst (4) per unit area in the cathode catalyst layer (10) was 4.38 mg/cm$^2$.

3. Preparation of MEA

The operation was performed in the same manner as in Example 1, item 4, except that the electrode having a cathode catalyst layer (1) was replaced with the electrode having a cathode catalyst layer (10), to prepare MEA (10).

4. Preparation of single cell

The operation was performed in the same manner as in Example 1, item 5, except that MEA (1) was replaced with MEA (10), to prepare a single cell (10) of a polymer electrolyte fuel cell

5. Evaluation of power generation property (measurement of catalytic activity)

The operation was performed in the same manner as in Example 1, item 6, except that the single cell (1) was replaced with the single cell (10), to measure current-voltage property and calculate a maximum power density of the single cell (10). MEA (10) had a catalytic activity, i.e., a maximum power density, of 180 mW/cm$^2$.

[Comparative Example 7]

1. Preparation of ink

0.284 g of the fuel cell catalyst (4) prepared in Example 4, item 1 and 0.071 g of carbon black as an electron conductive material (ketjen black EC300J, manufactured by LION Corporation) were added to 50 mL of 2-propanol (manufactured by Wako Pure Chemical Industries, Ltd.). Further, 2.84 g of an aqueous solution (aqueous 5% Nafion solution, manufactured by Wako Pure Chemical Industries, Ltd.) containing a proton conductive material (NAFION (registered trade name); 0.036 g) was added. These were mixed with an ultrasonic wave dispersion machine (UT-106H, manufactured by Sharp Manufacturing Systems Corporation) for 1 hour, to prepare a cathode ink (11).

2. Preparation of electrode having fuel cell catalyst layer

The operation was performed in the same manner as in Example 1, item 3, except that the cathode ink (1) was replaced with the cathode ink (11), to prepare an electrode having a cathode catalyst layer (11). The mass of the fuel cell catalyst (4) per unit area in the cathode catalyst layer (11) was 4.0 mg/cm$^2$.

3. Preparation of MEA

The operation was performed in the same manner as in Example 1, item 4, except that the electrode having a cathode catalyst layer (1) was replaced with the electrode having a cathode catalyst layer (11), to prepare MEA (11).

4. Preparation of single cell

The operation was performed in the same manner as in Example 1, item 5, except that MEA (1) was replaced with MEA (11), to prepare a single cell (11) of a polymer electrolyte fuel cell.

5. Evaluation of power generation property (measurement of catalytic activity)

The operation was performed in the same manner as in Example 1, item 6, except that the single cell (1) was replaced with the single cell (11), to measure current-voltage property and calculate a maximum power density of the single cell (11). MEA (11) had a catalytic activity, i.e., a maximum power density, of 64 mW/cm$^2$

[Comparative Example 8]

1. Preparation of ink

0.284 g of the fuel cell catalyst (4) prepared in Example 4, item 1 and 0.071 g of carbon black as an electron conductive material (ketjen black EC300J, manufactured by LION Corporation) were added to 50 mL of 2-propanol (manufactured by Wako Pure Chemical Industries, Ltd.). Further, 2.84 g of an aqueous solution (aqueous 5% Nafion solution, manufactured by Wako Pure Chemical Industries, Ltd.) containing a proton conductive material (NAFION (registered trade name); 0.284 g) was added. These were mixed with an ultrasonic wave dispersion machine (UT-106H, manufactured by Sharp Manufacturing Systems Corporation) for 1 hour, to prepare a cathode ink (12).

2. Preparation of electrode having fuel cell catalyst layer

The operation was performed in the same manner as in Example 1, item 3, except that the cathode ink (1) was replaced with the cathode ink (12), to prepare an electrode having a cathode catalyst layer (12). The mass of the fuel cell catalyst (4) per unit area in the cathode catalyst layer (12) was 4.0 mg/cm$^2$.

3. Preparation of MEA

The operation was performed in the same manner as in Example 1, item 4, except that the electrode having a cathode catalyst layer (1) was replaced with the electrode having a cathode catalyst layer (12), to prepare MEA (12).

4. Preparation of single cell

The operation was performed in the same manner as in Example 1, item 5, except that MEA (1) was replaced with MEA (12), to prepare a single cell (12) of a polymer electrolyte fuel cell.

5. Evaluation of power generation property (measurement of catalytic activity)

The operation was performed in the same manner as in Example 1, item 6, except that the single cell (1) was replaced with the single cell (12), to measure current-voltage property and calculate a maximum power density of the single cell (12). MEA (12) had a catalytic activity, i.e., a maximum power density, of 90 mW/cm$^2$.

[Table 1]

| Table 1: Result of elemental analysis (proportion of the number of atoms of each component) of each fuel cell catalyst | | | | | | | | |
|---|---|---|---|---|---|---|---|---|
| | Metal | | | | C | N | O | Compositional formula |
| | Nb | Fe | Ti | La | | | | |
| Catalyst (1) | 0.95 | 0.05 | - | - | 0.33 | 0.14 | 1.42 | $Nb_{0.95}Fe_{0.05}C_{0.33}N_{0.14}O_{1.42}$ |
| Catalyst (2) | 0.95 | 0.05 | | -- | 0.37 | 0.20 | 1.57 | $Nb_{0.95}Fe_{0.05}C_{0.37}N_{0.20}O_{1.57}$ |
| Catalyst (3) | - | - | 0.98 | 0.02 | 0.25 | 0.14 | 1.61 | $Ti_{0.98}La_{0.02}C_{0.25}N_{0.14}O_{1.61}$ |
| Catalyst (4) | - | - | 0.98 | 0.02 | 0.29 | 0.15 | 1.55 | $Ti_{0.98}La_{0.02}C_{0.29}N_{0.15}O_{1.55}$ |

[Table 2]

| Table 2: Compounding ratios of components in each ink and maximum power density | | | | | | | | |
|---|---|---|---|---|---|---|---|---|
| | Type of cathode ink | Content of fuel cell catalyst A (g) | Content of electron conductive material B (g) | A/B | A+B= C (g) | Content of proton conductive material D (g) | D/C | Maximum power density (mW/cm$^2$) |
| Ex.1 | (1) | 0.237 | 0.1183 | 2 | 0.355 | 0.142 | 0.4 | 63 |
| Ex.2 | (2) | 0.284 | 0.071 | 4 | 0.355 | 0.142 | 0.4 | 198 |
| Ex.3 | (3) | 0.237 | 0.1183 | 2 | 0.355 | 0.142 | 0.4 | 121 |
| Ex.4 | (4) | 0.284 | 0.071 | 4 | 0.355 | 0.142 | 0.4 | 293 |
| Comp.Ex.1 | (5) | 0.1183 | 0.237 | 0.5 | 0.355 | 0.142 | 0.4 | 32 |
| Comp.Ex.2 | (6) | 0.311 | 0.044 | 7 | 0.355 | 0.142 | 0.4 | 102 |
| Comp.Ex.3 | (7) | 0.284 | 0.071 | 4 | 0.355 | 0.036 | 0.1 | 53 |
| Comp.Ex.4 | (8) | 0.284 | 0.071 | 4 | 0.355 | 0.284 | 0.8 | 57 |
| Comp.Ex.5 | (9) | 0.1183 | 0.237 | 0.5 | 0.355 | 0.142 | 0.4 | 43 |
| Comp.Ex.6 | (10) | 0.311 | 0.044 | 7 | 0.355 | 0.142 | 0.4 | 180 |
| Comp.Ex.7 | (11) | 0.284 | 0.071 | 4 | 0.355 | 0.036 | 0.1 | 64 |
| Comp.Ex.8 | (12) | 0.284 | 0.071 | 4 | 0.355 | 0.284 | 0.8 | 90 |

From the comparison between Example 2 and Comparative Examples 1 to 4, and the comparison between Example 4 and Comparative Examples 5 to 8, it was made clear that by using the specific fuel cell catalyst and controlling the compounding ratio of each component in the ink, the catalytic activity, i.e., the maximum power density, of MEA obtained from such an ink can be increased.

Explanation of Letters and Numerals

1       cathode gas diffusion layer
1'      anode gas diffusion layer
2       cathode catalyst layer
3       anode catalyst layer
4       electrolyte membrane
11      membrane electrode assembly (MEA)
12      gasket
13      separator
14      collector
15      rubber heater
21      single cell of polymer electrolyte fuel cell
22      cathode humidifier
23      anode humidifier
24      current-voltage property measurement apparatus

Claims

1.  An ink for forming a fuel cell catalyst layer, wherein the ink comprises a fuel cell catalyst, an electron conductive material, a proton conductive material and a solvent, wherein
    the fuel cell catalyst comprises an oxycarbonitride containing a metal selected from niobium and/or titanium and optionally containing a metal other than niobium and titanium; **characterized in that**
    the mass ratio [(A) / (B)] of the content (A) of the fuel cell catalyst to the content (B) of the electron conductive material is 1 to 6; and
the mass ratio [(D)/(C)] of the content (D) of the proton conductive material to the total content (C) of the fuel cell catalyst and the electron conductive material is 0.2 to 0.6.

2. The ink according to claim 1, wherein the metal-containing oxycarbonitride has a primary particle diameter of 5 nm to 1.5 $\mu$m.

3. A fuel cell catalyst layer formed by using the ink according to claim 1 or 2.

4. The fuel cell catalyst layer according to claim 3, wherein the mass of the fuel cell catalyst per unit area is 2.5 to 4.3 mg/cm$^2$.

5. An electrode comprising a fuel cell catalyst layer and a gas diffusion layer, wherein the fuel cell catalyst layer is the fuel cell catalyst layer according to claim 3 or 4.

6. A membrane electrode assembly comprising a cathode, an anode and an electrolyte membrane interposed between the cathode and the anode, wherein the cathode is the electrode according to claim 5.

7. A fuel cell comprising the membrane electrode assembly according to claim 6.

8. A polymer electrolyte fuel cell comprising the membrane electrode assembly according to claim 6.

**Patentansprüche**

1. Tinte zum Bilden einer Brennstoffzellenkatalysatorschicht, wobei die Tinte einen Brennstoffzellenkatalysator, ein Elektronen leitendes Material, ein Protonen leitendes Material und ein Lösungsmittel umfasst, wobei der Brennstoffzellenkatalysator ein Oxikarbonitrid umfasst, das ein unter Niob und/oder Titan ausgewähltes Metall und gegebenenfalls ein anderes Metall als Niob und Titan enthält, **dadurch gekennzeichnet, dass** das Massenverhältnis [(A)/(B)] des Gehalts (A) des Brennstoffzellenkatalysators zu dem Gehalt (B) des Elektronen leitenden Materials 1 bis 6 ist; und
das Massenverhältnis [(D)/(C)] des Gehalts (D) des Protonen leitenden Materials zu dem Gesamtgehalt (C) des Brennstoffzellenkatalysators und des Elektronen leitenden Materials 0,2 bis 0,6 ist.

2. Tinte nach Anspruch 1, wobei das Metall enthaltende Oxykarbonitrid einen Primärteilchendurchmesser von 5 nm bis 1,5 $\mu$m aufweist.

3. Unter Verwendung der Tinte nach Anspruch 1 oder 2 gebildete Brennstoffzellenkatalysatorschicht.

4. Brennstoffzellenkatalysatorschicht nach Anspruch 3, wobei die Masse des Brennstoffzellenkatalysators pro Flächeneinheit 2,5 bis 4,3 mg/cm$^2$ ist.

5. Elektrode, die eine Brennstoffzellenkatalysatorschicht und eine Gasdiffusionsschicht umfasst, wobei die Brennstoffzellenkatalysatorschicht die Brennstoffzellenkatalysatorschicht nach Anspruch 3 oder 4 ist.

6. Membranelektrodenaufbau, der eine Kathode, eine Anode und eine zwischen der Kathode und der Anode befindliche Elektrolytmembran umfasst, wobei die Kathode die Elektrode nach Anspruch 5 ist.

7. Brennstoffzelle, welche den Membranelektrodenaufbau nach Anspruch 6 umfasst.

8. Polymerelektrolytbrennstoffzelle, die den Membranelektrodenaufbau nach Anspruch 6 umfasst.

**Revendications**

1. Encre pour former une couche de catalyseur de pile à combustible, dans laquelle l'encre comprend un catalyseur de pile à combustible, un matériau conducteur d'électrons, un matériau conducteur de protons et un solvant, dans laquelle

le catalyseur de pile à combustible comprend un oxycarbonitrure contenant un métal sélectionné parmi le niobium et/ou le titane et contenant, optionnellement, un métal autre que le niobium et le titane ; **caractérisée en ce que** le rapport de masse [(A)/(B)] entre le contenu (A) du catalyseur de pile à combustible et le contenu (B) du matériau conducteur d'électrons est de 1 à 6 ; et

le rapport de masse [(D)/(C)] entre le contenu (D) du matériau conducteur de protons et le contenu total (C) du catalyseur de pile à combustible et du matériau conducteur d'électrons est de 0,2 à 0,6.

2. Encre selon la revendication 1, dans laquelle l'oxycarbonitrure contenant un métal a un diamètre de particule principal de 5 nm à 1,5 $\mu$m.

3. Couche de catalyseur de pile à combustible formée en utilisant l'encre selon la revendication 1 ou 2.

4. Couche de catalyseur de pile à combustible selon la revendication 3, dans laquelle la masse du catalyseur de pile à combustible par surface unitaire est égale à 2,5 à 4,3 mg/cm$^2$.

5. Electrode comprenant une couche de catalyseur de pile à combustible et une couche de diffusion de gaz, dans laquelle la couche de catalyseur de pile à combustible est la couche de catalyseur de pile à combustible selon la revendication 3 ou 4.

6. Ensemble membrane-électrodes comprenant une cathode, une anode et une membrane d'électrolyte interposée entre la cathode et l'anode, dans lequel la cathode est l'électrode selon la revendication 5.

7. Pile à combustible comprenant l'ensemble membrane-électrodes selon la revendication 6.

8. Pile à combustible à électrolyte polymère comprenant l'ensemble membrane-électrodes selon la revendication 6.

[Fig.1]

[Fig.2]

[Fig.3]

[Fig.4]

[Fig.5]

[Fig.6]

[Fig.7]

[Fig.8]

[Fig.9]

[Fig.10]

[Fig.11]

[Fig.12]

[Fig.13]

[Fig.14]

[Fig.15]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009152112 A
- JP 2009158128 A
- JP 2009152075 A
- JP 2009152128 A
- JP 2009151980 A
- JP 2009211869 A
- JP 2008305699 A
- JP 2008262904 A
- JP 2009070673 A
- JP 2006054165 A
- JP 2007031781 A
- CA 2718893

**Non-patent literature cited in the description**

- **S. DOI ; A. ISHIHARA ; S. MITSUSHIMA ; N. KAMIYA ; K. OTA.** *Journal of The Electrochemical Society,* 2007, vol. 154 (3), B362-B369